# EUROPEAN PATENT APPLICATION

(11) **EP 4 765 856 A1**
(43) Date of publication of application: **24.06.2026**
(21) Application number: 24220979.9
(22) Date of filing: 18.12.2024
(51) Int. Cl.: H04Q 11/00

(54) **N-PORT SMART DATA SWITCH FOR AN OPTICAL DATA NETWORK**

(71) Applicant: Astrape B.V., 5656 AE Eindhoven (NL)
(72) Inventor: Camilli, Marco, 2850 Boom (BE)
(74) Representative: van Dijk, Victor Emmanuel Stephanus

(57) **Abstract**

The invention relates to an N-port smart data switch (SSVη for an optical data network (10-1) comprising a plurality of data network nodes (N1-1, N2-1, N3-1, N4-1, NN-1). The N-port smart data switch (SSW) comprises: i) a switching matrix module (SMM) having Y circuit switches (OCS1, OCS2..OCSY) being placed in parallel, each circuit switch (OCS1, OCS2..OCSY) having N/C inputs and N/C outputs; ii) an N-to-N*Y optical distribution block (PDB1) placed between the N optical inputs (xNi) and the switching matrix module (SMM); iii) a C-to-1-combiner stage (CBM1) placed between the N-to-N*Y optical distribution block (PDB1) and the switching matrix module (SMM), iv) an N-to-N*C optical distribution block (PDB2) placed between the switching matrix module (SMM) and the optical outputs; and v) a Y-to-1 combiner stage (CBM2) placed between the N-to-N*C optical distribution block (PDB2) and the optical outputs, wherein N is the number of optical inputs (xNi) and the number of optical outputs (xNo), wherein N is an integer equal to or larger than two, and wherein Y is the number of circuit switches (OCS1, OCS2..OCSY) within the switching matrix module (SMM), wherein Y is an integer equal to or larger than one, and C is the oversubscription factor of the N-port smart data switch (SSW), wherein C is an integer equal to or larger than two. The use of smaller switching matrices in the current invention leads to a significantly increased yield when implementing these functions in photonic integrated circuit.

## Description

### FIELD OF THE INVENTION

The invention relates to an N-port smart data switch for an optical data network comprising a plurality of data network nodes, the N-port smart data switch comprising: i) N optical inputs; ii) N optical outputs and iii) a switching matrix module having Y circuit switches being placed in parallel, the switching matrix module being placed between the N optical inputs and the N optical outputs. The invention also relates to an optical data network comprising a plurality of data network nodes and smart data switch connecting these data network nodes and allowing data communication there between.

### BACKGROUND OF THE INVENTION

Optical data networks typically connect together data centres (both inter-datacentres and intra-datacentres), enterprises, service providers, and residential homes. These networks facilitate communication and the exchange of data between various devices and locations.

Optical data networks are high-speed communication networks that utilize optical fibres to transmit data at incredibly fast speeds, typically measured in gigabits or terabits per second. These networks are the backbone of modern telecommunications infrastructure and are essential for transmitting large amounts of data quickly and efficiently.

The state of the art in optical data networks is constantly evolving, with advancements being made in various areas such as optical components, transmission techniques, and network architectures. Some key developments in the field include the deployment of wavelength division multiplexing (WDM) technology, which allows multiple data streams to be transmitted over a single optical fibre by using different wavelengths of light. This significantly increases the capacity of the network and reduces the need for additional infrastructure.

Another important advancement is the use of coherent optical transmission, which enables higher data rates and longer transmission distances by using advanced signal processing techniques to mitigate signal degradation. This technology has enabled the development of ultra-high-speed networks capable of transmitting data at speeds exceeding 100 gigabits per second.

Overall, the state of the art in optical data networks is focused on increasing capacity, improving efficiency, and enhancing network agility to meet the ever-growing demands of modern data-intensive applications and services.

Optical data networks are known as such. Even though there have been many developments over the last years in the field of optical data networks, there is continuing need to further develop these networks in terms of their efficiency and adaptability to varying demands as far as the ever increasing amount of network traffic is concerned.

In non-prepublished patent application EP24185872.9 the current inventor developed an optical data network comprising smart data switches, which comprises multiple circuit and packet switches. One important component to build these smart data switches are optical distribution blocks for demultiplexing to multiple optical outputs and multiplexing to a single optical output. The performance and costs of these optical distributions blocks was investigated and determined requiring improvement.

In non-prepublished patent application EP24199982.0 the current inventor developed a wavelength selection block and an optical distribution block that may be used in a smart data switch.

Despite these developments challenges may arise when integrating the switching matrix of the smart data switch into a photonic integrated circuit (PIC). Yields of these PICs are still relatively low, particularly when the switching matrix is large.

### SUMMARY OF THE INVENTION

The invention has for its object to remedy or to reduce at least one of the drawbacks of the prior art, or at least provide a useful alternative to prior art, *particularly increase the yield*/*manufacturability* o*f a smart data switches requiring a large switching matrix.*

The object is achieved through features, which are specified in the description below and in the claims that follow.

The invention is defined by the independent patent claims. The dependent claims define advantageous embodiments of the invention.

In a first aspect the invention relates to an N-port smart data switch for an optical data network comprising a plurality of data network nodes. The N-port smart data switch comprises:
i) N optical inputs;
ii) N optical outputs;
iii) a switching matrix module having Y circuit switches being placed in parallel, each circuit switch having N/C inputs and N/C outputs, the switching matrix module being placed between the N optical inputs and the N optical outputs;
iv) an N-to-N*Y optical distribution block placed between the N optical inputs and the switching matrix module;
v) a C-to-1-combiner stage placed between the N-to-N*Y optical distribution block and the switching matrix module, wherein the C-to-1-combiner stage combines respective first groups of each C outputs of the N-to-N*Y optical distribution block into respective single optical signals in such a way that each output of the N-to-N*Y distribution block is used only once, wherein the first groups are formed in accordance with a first partition scheme;
vi) an N-to-N*C optical distribution block placed between the switching matrix module and the optical outputs; and
vii) a Y-to-1 combiner stage placed between the N-to-N*C optical distribution block and the optical outputs, wherein the Y-to-1 combiner stage combines respective second groups of Y outputs of the N-to-N*C-optical distribution block into respective single optical signals in such a way that each output of the N-to-N*C distribution block is used only once, wherein the second groups are formed in accordance with a second partition scheme, wherein the second partition scheme is chosen such that any scrambling that occurred during forming of the first groups in accordance with the first partition scheme is reversed.

In the invention according to claim 1 the N-to-N*Y optical distribution block is configured for
a) routing a respective multi-wavelength optical signal on each respective optical input to Y respective outputs of the first distribution block, and for
b) selecting at least one individual wavelength signal within each multi-wavelength optical signal for being routed to a respective one of the Y respective outputs of the N-toN*Y optical distribution block.

Furthermore, according to claim 1 the N-to-N*C optical distribution block is configured for
c) routing respective optical signals on each output of the circuit switches within the switching matrix module to C outputs of the N-to-N*C optical distribution block, and for
d) selecting individual wavelength signals from respective multi-wavelength optical signals coming from the switching matrix module to be routed to a respective one of the N optical outputs.

In the above-presented parametrized definition of the invention according to claim 1 parameter "N" is, obviously, equal to the number of ports of the smart data switch, which equals the number of optical inputs and the number of optical outputs. In the invention parameter "N" is an integer equal to or larger than two. Furthermore, in the invention parameter "Y" is the number of circuit switches within the switching matrix module, wherein parameter "Y" is an integer equal to or larger than one. Finally, in the invention parameter "C" is the oversubscription factor of the N-port smart data switch, wherein parameter "C" is an integer equal to or larger than two. For the sake of simplicity and brevity the word "parameter" is left out in the rest of the specification. Also, in various places the quotes are not written in order to increase intelligibility of the specification. What is important is that "N", "Y", C", "Z" and "W" are parameters.

The effects of the features of the N-port smart data switch in accordance with the invention are as follows. In the basis the structure of the N-port data switch is straightforward having N optical inputs and N optical outputs having optical switching circuitry in between facilitating the data communication between the plurality of data network nodes that are connected to the inputs and outputs in the conventional way. A very important aspect of the invention is that te N-port smart data switch of the invention as part of the optical switching circuitry, effectively integrates two types of switching matrices: namely the optical distribution blocks each comprising, for example, semiconductor optical amplifiers (SOAs) that act as wavelength recombiners, and the switching matrix module (comprising Y circuit switches similar to non-prepublished patent application EP24185872.9) based on, for example, a Mach-Zehnder (MZ) switching matrix (or an optical circuit switch (OCS) module. This combination of two switching matrices improves resilience and enhances the efficiency of path assignments. However, in certain scenarios and conditions, the design in non-prepublished patent application EP24185872.9 may appear as over-engineered, as only a limited number of switching module paths are actively used during significant periods of time. The inventor discovered that this over-engineering may be exploited in that the N-port smart data switch in accordance with the current invention implements oversubscription, which has never been reported before in circuit switching. The inventor has discovered that in the optical domain, oversubscription enables using smaller switching matrices relative to the total number of ports, streamlining the design.

The current invention employs oversubscription, retaining the architecture in non-prepublished patent application EP24185872.9, but introducing two additional blocks: C-to-1-combiner stage placed between the N-to-N*Y optical distribution block and the switching matrix module and the Y-to-1 combiner stage placed between the N-to-N*C optical distribution block and the optical outputs. These changes facilitate scalability to a larger number of ports while using smaller switching matrices than the total number of available ports.

In the N-port smart data switch of the current invention:
- "N" is the number of ports;
- "C" is the oversubscription factor (a new parameter compared to non-prepublished patent application EP24185872.9);
- "Z" is the number of ports in a switching module (a new parameter compared to non-prepublished patent application EP24185872.9);
- "Y" is the number of switching modules;
- "W" is the number of wavelengths used in the multi-wavelength optical signals (preferred embodiments of the N-port smart data switch, and
- The constraint applies that *N* = *C* × *Z*. When C = 1, N equals Z, and the resulting schematic is identical to the one in non-prepublished patent application EP24185872.9.

It is important to note that the use of smaller switching matrices in the current invention leads to a significantly increased yield when implementing these functions in photonic integrated circuit (PIC).

For the sake of completeness, in the N-port smart data switch of the current invention one could use wavelength selection blocks and an optical distribution block of the kind presented in non-prepublished patent application EP24199982.0, but this is not essential for the current invention. What is important is that the earlier-discussed two different types of switching matrices are used as introduced in non-prepublished patent application EP24185872.9, in combination with the oversubscription as disclosed in the current specification.

To facilitate understanding of the invention one or more expressions are further defined hereinafter.

Whenever the wording "multi-wavelength optical signal" is used, this must be interpreted as an optical signal comprising multiple sub-signals multiplexed in the frequency domain, wherein each sub-signal used a different wavelength.

Whenever the wording "individual wavelength optical signal" is used, this must be interpreted as an optical signal comprising only one sub-signal that is substantially associated with one wavelength.

Whenever the wording "stage" is used, this must be interpreted as a level of hierarchy in an (optical) circuit, the first stage being the first layer of components seen at the input side, and each subsequent/consecutive stage being the next hierarchical layer in the (optical) circuit.

Wherever the wording "optical data network" is used, this must be interpreted as a data network that is mainly build up out of a plurality of data network nodes connected by switches and substantially optical data connections, such as optical fibre connections and optical waveguides. There may be local electrical connections as well, but it is the optical domain that is dominant.

Wherever the wording "data network node" is used, this must be interpreted as an entity connected to the data network, which either generates data to be communicated over the data network and/or receives such data from the data network. Examples of data network nodes are a server, a supercomputer, a switch (both smart and legacy) including a Top-of-Rack (TOR) or a leaf and spine switch.

Wherever the wording "data" is used, this must be interpreted as the information that is transmitted over the data network, such information typically being embodied in data packets.

Wherever the wording "communication protocol" is used, this must be interpreted as the protocol data is used to communicate data over the data network, such as the Transmission Control Protocol (TCP), Internet Protocol (IP), User Datagram Protocol (UDP), Internet Control Message Protocol (ICMP), Ethernet, and InfiniBand. It must be noted that data packets often have multiple layers, wherein each layer has its own communication protocol. For example, a TCP segment is embedded in an IP packet that is embedded in an Ethernet frame.

Wherever the wording "data packet" is used, this must be interpreted as a quantity of data that is packaged, which as a whole may be communicated over a data network in accordance with a predefined communication protocol or a set of predefined communication protocols. Typically, a data packet comprises a header and payload to be communicated, wherein the data itself may comprise another header in accordance with another communication protocol together with its payload. The header of a TCP segment comprises fields for: source port, destination port, sequence number, acknowledgement number, reserved functions, data offset, flags, window, checksum, urgent pointer, options, padding. The data or payload, being variable in size, is embedded by the header. The header of an IP packet comprises fields for: Version, IHL, Type-of-Service, total length, identification, flags, fragmentation offset, time-to-live, protocol, header checksum, source address, destination address, options (+padding). The data, being variable in size, follows the header. The header of a ICMP packet is typically 8-bytes and comprises fields for: type, code, checksum, rest of header. The data, being variable in size, follows the header.

Wherever the wording "network interface" is used, this must be interpreted as the part of the network node that is configured for allowing communication with the data network. It may be implemented in dedicated hardware (such as a PCIE-card to be inserted in a PCIE-slot or a full-custom piece of hardware), but could also be implemented in software running on a processor/controller, or even as a combination of both.

Wherever the wording "data connection network" is used, this must be interpreted as the part of the data network connecting the different network nodes together, including the optical connections, the data switches, and maybe some local electrical connections.

Wherever the wording "data switch" is used, this must be interpreted as the components in the data network that dynamically establishes data links between the network nodes that are communication or supposed to communicate with each other.

Whenever the wording "optical connection" is used, this must be interpreted as a connection over which optical signals are transmitted. Example of such optical connections are glass fibre (single mode fibre, multimode fibre, polarization maintaining fibre) and optical waveguides.

Wherever the wording "data link" is used, this must be interpreted as an established data connection between two network nodes over which data can be, has been or will be communicated.

Wherever the wording "smart data switch" is used, this must be interpreted as a data switch with extra built-in functionality, beyond the functionality of a conventional data switch, in line with the data switch presented in this specification.

Wherever the wording "packet switch" is used, this must be interpreted as a data switch that is capable of analysing the data packet and establishing the data links based on the analysis of the data packet. An example of such packet switch is an electronic packet switch.

Wherever the wording "circuit switch" is used, this must be interpreted as a data switch that is not able of analysing the data packet, but establishes the data links under control of a controller that determines the destination of the data packet.

In an embodiment of the N-port smart data switch in accordance with the invention there are W predefined wavelengths in use by the N-port smart data switch, thereby allowing each multi-wavelength optical signal present on the respective optical inputs and optical outputs, in operational use, to have W predefined individual wavelength optical signals that are multiplexed in each respective multi-wavelength optical signal, wherein parameter "W" is the number of wavelengths used by the N-port smart data switch, wherein W is an integer equal to or larger than two. Furthermore, each optical distribution block is configured for de-multiplexing the multi-wavelength optical signals on inputs of each respective optical distribution block for facilitating individually selectively passing or blocking the respective individual wavelength optical signals so as to obtain respective gated individual wavelength optical signals on the respective gate outputs. Furthermore, each optical distribution block is further configured for multiplexing the gated individual wavelength optical signals into respective gated multi-wavelength optical signals on outputs of each optical distribution block. Multi-wavelength optical signals are commonly used in optical data networks, yet in the current invention this is not essential, but forms an advantageous embodiment.

In an embodiment of the N-port smart data switch in accordance with the invention the first partition scheme is chosen such that within each first group of C outputs of the N-toN*Y optical distribution block no individual wavelength optical signals are combined that originate from the same optical input. Theoretically any first partition scheme could work, even a fully random partition scheme. However, the first partition scheme as presented in this embodiment provides for an efficient and predictable scrambling of the outputs of the N-to-N*C-optical distribution block.

In an embodiment of the N-port smart data switch in accordance with the invention the first partition scheme is chosen such that within each first group of C outputs of the N-toN*Y optical distribution block only optical signals are combined that are targeted for the same circuit switch within the N-port smart data switch. As mentioned in the previous embodiment, theoretically any first partition scheme could work, even a fully random partition scheme. However, the first partition scheme as presented in this embodiment provides for an even more efficient and predictable scrambling of the outputs of the N-to-N*C-optical distribution block, particularly when combined with the previously-discussed embodiment.

In an embodiment of the N-port smart data switch in accordance with the invention the number of circuit switches within the switching matrix module equals the oversubscription factor of the N-port smart data switch. This group embodiments results in a simplification of the smart data switch, because then the optical distribution blocks can be designed the same (could be the same PIC).

In an embodiment of the N-port smart data switch in accordance with the invention the number of data network nodes equals 48, which equals the number of optical inputs and the number of optical outputs, and wherein the number of circuit switches within the switching matrix module equals three, and wherein the oversubscription factor of the N-port smart data switch equals three. This constitutes an embodiment of the invention that was developed for a specific application.

In a second aspect the invention relates to an optical data network comprising a plurality of data network nodes and the N-port smart data switch according to the invention, the N-port smart data switch connecting these data network nodes and allowing data communication there between. The optical data network of this embodiment greatly benefits from the smart data switch of the current invention. In alternative embodiments there may be more than one N-port smart data switch all dependent on the size of the optical data network.

### BRIEF INTRODUCTION OF THE DRAWINGS

In the following is described example of preferred embodiments illustrated in the accompanying drawings, wherein:
Fig. 1 shows an optical data network as previously developed;
Fig. 2 shows further aspects of the optical data network of Fig. 1;
Fig. 3 shows further implementation aspects of the smart data switch of Fig. 1;
Fig. 4 shows a generic embodiment of wavelength selection block as previously developed by the current inventor;
Fig. 5 shows an optical distribution block comprising a plurality of wavelength selection blocks as shown in Fig. 4.
Fig. 6 shows an overview of the main components of an N-port smart data switch in accordance with the invention;
Fig. 7 shows a 1-to-Y wavelength selection block that may be used as the first optical distribution block of Fig. 6;
Fig. 8 shows a N-to-N*Y optical distribution block comprising a plurality of wavelength selection blocks as shows in Fig. 7, which may be used in the first optical distribution block of Fig. 6;
Fig. 9 shows a C-to-1 combiner block that may be used as the N-port smart data switch of Fig. 6;
Fig. 10 shows a switching matrix module that may be used in the N-port smart data switch of Fig. 6;
Fig. 11 shows a 1-to-C wavelength selection block that may be used in the second optical distribution block of Fig. 6;
Fig. 12 shows a N-to-N*C optical distribution block comprising a plurality of wavelength selection blocks as shows in Fig. 7, which may be used as the optical distribution block of Fig. 6;
Fig. 13 shows a Y-to-1 combiner block that may be used in the N-port smart data switch of Fig. 6;
Fig. 14 shows a simple embodiment of the current invention in order to explain further aspects of the invention; and
Fig. 15 shows a further embodiment of the current invention which the inventors have developed.

### DETAILED DESCRIPTION OF THE EMBODIMENTS

Various illustrative embodiments of the present subject matter are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The present subject matter will now be described with reference to the attached figures. Various systems, structures and devices are schematically depicted in the drawings for purposes of explanation only and to not obscure the present disclosure with details that are well known to those skilled in the art. Nevertheless, the attached drawings are included to describe and explain illustrative examples of the present disclosure. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The proposed innovation is a cutting-edge optical switch that integrates multiple advanced technologies to deliver configurable wavelength selectivity, a high port count, and robustness against hardware failures. The current invention can achieve a high number of ports without requiring a large switching matrix, which currently cannot be easily integrated into a Photonic Integrated Circuit (PIC). The invention was developed to address the growing demand for high-speed, high-port count optical switches in modern communication networks. Existing technologies either offer high port counts with slower switching speeds or high speeds with limited ports. By integrating advanced optical technologies, this invention bridges the gap, providing a robust solution for next-generation optical networks.

Current optical switching technologies are primarily divided into:
1) Large Port-Count Optical Switches:
   - Typically based on Micro-Electro-Mechanical Systems (MEMS).
   - Capable of handling a large number of ports.
   - The switching speed is generally around tens of milliseconds.
   - MEMS technology allows for significant scalability in terms of port count but is limited by slower switching times.
2) High-Speed Optical Switches:
   - Utilizes Photonic Integrated Circuits (PICs).
   - Achieves very high switching speeds, typically in the range of nanoseconds to tens of microseconds.
   - These switches are optimized for speed but traditionally support a lower number of ports due to integration and size constraints.

MEMS-Based Switches suffer from slow switching speeds limit their suitability for high-speed applications. Also they require complex fabrication processes due to sophisticated micromachining techniques.

PIC-Based Switches have the disadvantage that achieving high port counts is challenging due to integration limitations. Also, thermal management issues arise from the dense packing of optical components on a single chip.

The invention aims to overcome the above limitations by combining the strengths of different PIC technologies to achieve high port counts and fast switching speeds. The design is robust against hardware failures and provides configurable wavelength selectivity.

As will be elaborated upon, the design incorporates two types of switching matrices:
1. SOA based Switching Matrix:
   - Uses Semiconductor Optical Amplifiers (SOAs) as wavelength recombiners and amplifiers.
   - Capable of switching within nanoseconds.
2. MZ Based Switching Matrix:
   - Utilizes Mach-Zehnder interferometers (MZ) and thermo-optic effects.
   - Achieves switching times within tens of microseconds.

This dual approach enhances resilience and improves path assignment efficiency. The design also employs oversubscription, optimizing the use of smaller switching modules than the total number of ports.

The background of the invention and the embodiments of the invention will be discussed with reference to the figures hereinafter.

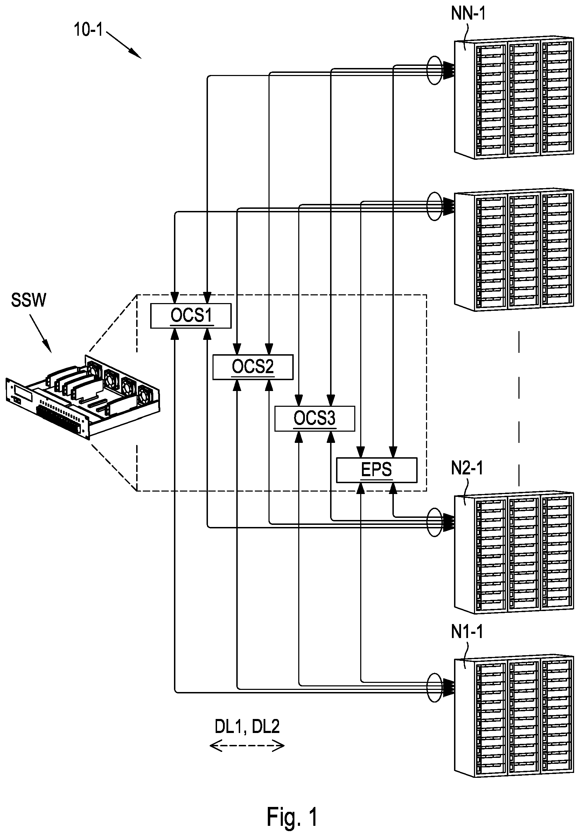

Fig. 1 shows an optical data network 10-1 as previously developed and disclosed in non-prepublished patent applications EP24185872.9 and EP24199982.0. The respective network nodes N1-1, N2-1, NN-1 in Fig. 1 are top-of-racks (TOR's) of server racks or servers. in this embodiment. In this embodiment the smart data switch SSW comprises three optical circuit switches OCS1, OCS2, OCS3 and one electronic packet switch EPS as illustrated. The heart of the optical data network 10-1 of the invention lies in the fast switching circuit switch (preferably a fully-optical switch), which establishes itself as the cornerstone for high-velocity data transit routes. This device can be configured to operate either as a broadband or a selective wavelength switch, deftly catering to the diverse demands of elephant traffic. Crafted for the expeditious and efficient relay of large data sets, the optical switch enables quick data transfers, sidestepping the typical bottlenecks inherent to electronic switches. Fig. 1 may be generalized to multiple lines handled by different optical switches and electronic switches.

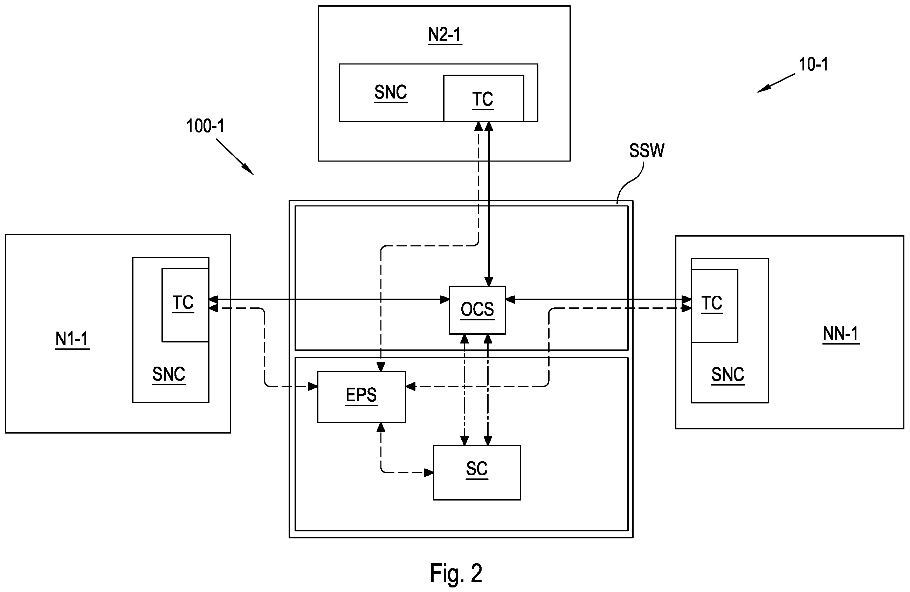

Fig. 2 shows further aspects of the optical data network 10-1 of Fig. 1, particularly relates to the switch controller SC. The switch controller SC with dual functionality is the operational epicentre, directing the internal control plane. This dual-purpose controller governs the electronic path as an electronic switch, adept at managing the dynamic and frequent small data packets of mouse traffic, while concurrently ensuring a smooth integration and transition between the optical switch and its electronic counterpart. This versatility guarantees an effective data throughput, regardless of the traffic type.

At the network nodes N1-1, N2-1, NN-1, be servers, ToRs, or other apparatuses. The smart network interface cards SNC are key. These cards SNC interface with both the optical and electronic paths. Through the utilization of control messages configuring the data classifiers which discern the traffic, the smart network interface cards SNC discern the most optimal path for packet delivery, channelling data via the optical or electronic switch, predicated on packet size and priority. This intelligent routing takes place at the NIC level, dictated by the configurations from the switch controller SC, elevating the network's efficiency and adaptability. Each network interface card SNC comprises a transceiver module TC (QFSP or OSFP) for allowing communication with the optical data network 10-1.

In unison, optical data network of Figs. 1 and 2 manages of both mouse and elephant traffic, surmounting the shortcomings of extant network technologies. The amalgamation of the Fast Switching Optical Switch's prowess in high-volume data transmission, the Switch Controller's skill in small packet oversight, and the Smart NICs' adeptness in dynamic routing yields an architecture of superior efficiency and responsiveness to the varied exigencies of network traffic. More information on how the different traffic classes are determined is described in disclosed in non-prepublished patent application EP24185872.9.

As also disclosed in non-prepublished patent applications EP24185872.9 and EP24199982.0 the optical data network 10-1 in Figs. 1 and 2 may comprise:
i) the plurality of data network nodes N1-1, N2-1..NN-1 configured for communicating data with each other N1-1, N2-1..NN-1, wherein the data is communicated using a communication protocol, the data comprising data packets in accordance with the communication protocol, wherein each data network node N1-1, N2-1..NN-1 is provided with a network interface card SNC; and
ii) the data connection network 100-1 comprising a smart data switch SSW at least one circuit switch OCS and preferably comprising at least one packet switch EPS, wherein the data connection network 100-1 further comprises a plurality of optical connections connecting the smart data switch SSW with the network interface cards SNC of the plurality of data network nodes N1-1, N2-1..NN-1 thereby forming the data connection network 100-1 for allowing establishment of data links DL1, DL2 between pairs of said plurality of data network nodes N1-1, N2-1..NN-1.

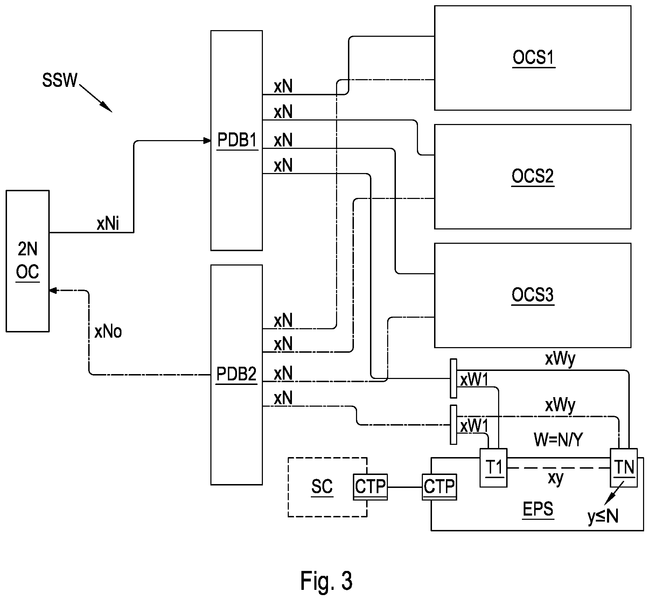

Fig. 3 shows further implementation aspects of the smart data switch SSW of Fig. 1 as previously developed and disclosed in non-prepublished patent application EP24185872.9. The smart data switch SSW is designed to harness the strengths of both optical and electronic switching to heighten efficiency and diminish power consumption. Fig. 3 lays out a generic smart data switch SSW, illustrating the integral components that form its structure. On the left of the figure, it starts with the external ports OC, which are fibre connectors (optical links) and comprise N inputs xNi and N outputs xNo. This may vary depending on the chosen technology. For single fibres utilizing Wavelength Division Multiplexing (WDM), the typical connector is the dual LC connector, which employs separate fibres for transmission (TX) and reception (RX). For simplicity in the diagram, TX fibres are depicted heading to the right and RX fibres to the left, with the notation 'xN' signifying paths for N independent fibres.

Following the TX path, we encounter a first optical distribution block PDB1, the initial routing station that separates various input wavelengths, channelling them to distinct switches (i.e., it acts as a demultiplexer). This versatile component can be implemented using different technologies and is also capable of recombining signals when needed. In a basic setup, an Arrayed Waveguide Grating (AWG) might be used to filter and demultiplex wavelengths-in the diagram's case, four. The number of wavelengths handled correlates with the transceiver type utilized..

Exiting the first optical distribution block PDB1 are 4xN fibres corresponding to the number of utilized wavelengths (in this example), which then connect to their respective circuit switch OCS1, OCS2, OCS3 or package switch EPS. For an optical circuit switch, each input fibre can be real-time linked to one or several output fibres, wherein various technologies (MEMS, InP, SiPh) are possible. Therefore, the current invention is independent from specific technological constraints. The output fibres proceed to a second optical distribution block PDB2 as illustrated, which recombines the wavelengths and connects the composite fibre back to the RX side of the external ports xNo. A simple combiner may be used to implement this component.

Contrastingly, when utilizing an electronic packet switch ESP, which cannot operate purely within the optical domain, the fibres are coupled with transceivers T1..TN either as pluggable units similar to those found in NICs or integrated within the electronic packet switch ESP, wherein the data is managed through a standard electronic packet switch process.

It's vital to emphasize that the electronic packet switch ESP is also connected to the switch controller SC via respective control ports CTP. This connection forms the control plane, which responds to requests from the NIC and manages the optical circuit switches OCS, as will discussed later. Depending on the traffic requirements, multiple electronic packet switches ESP may be deployed.

In summary, this diagram offers a high-level view of the smart data switch's architecture, demonstrating how it amalgamates optical and electronic components to forge a path toward more efficient and power-conscious network switching.

The rectangles without reference signs in Fig. 3 do not indicate components, but rather illustrate that the fibres getting aggregated differently when routed to the transceivers T1..TN.

The inventor realized that several improvements on the design of the optical distribution blocks PDB1, PDB2 are possible as these blocks are bulky, difficult to manufacture with high yield and therewith costly.

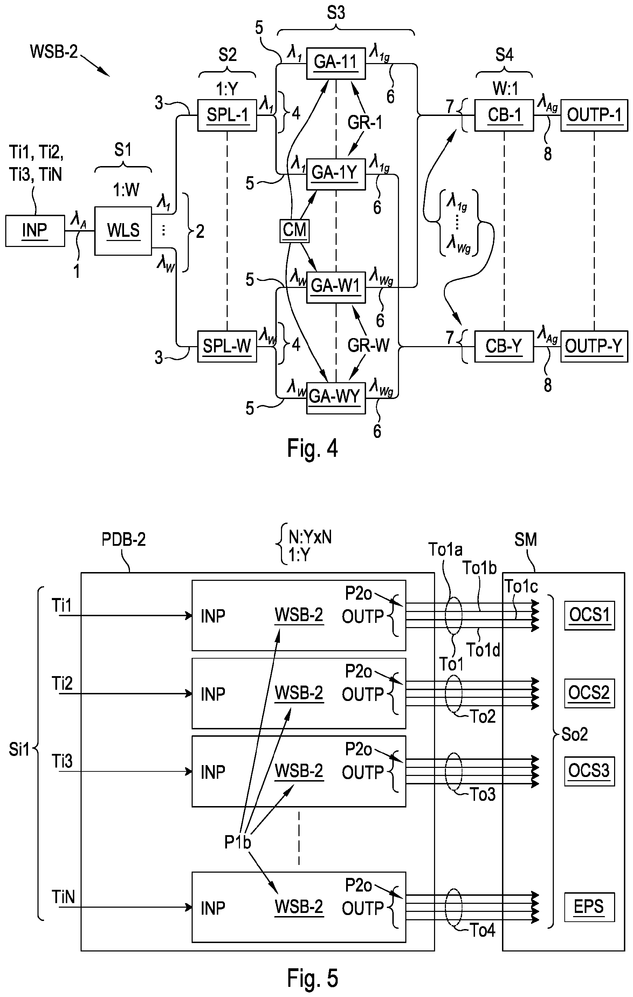

Fig. 4 shows a generic embodiment of wavelength selection block WSB-2 as previously developed by the current inventor. The wavelength selection block WSB-2 has an optical input INP that is to be connected with a respective one of the earlier-mentioned optical input terminals Ti1..TiN when used in an optical distribution block PDB-2 as, for instance, To1 shows. each wavelength selection block WSB-2 comprises four consecutive stage S1, S2, S3, S4 as illustrated. The optical input INP carries a multi-wavelength optical signal λA in an optical fibre 1, which is coupled into a first stage S1 of the block as illustrated.

A key feature of the current invention is that the first stage S1 comprises a wavelength splitter WLS, which may be an arrayed waveguide grating AWG, but it may also be a multi-mode interference (MMI) in certain embodiments, particularly when the number of wavelengths is limited. Thus, the first stage S1 performs a demultiplexing of the multi-wavelength optical signal λA in the optical fibre 1 into a first number W of individual wavelength signals λ1.. λW on its wavelength outputs 2.

A second stage S2 connected with the first stage S1 comprises a same number W of optical splitters SPL-1..SPL-W, each optical splitter SPL-1..SPL-W having a single splitter input 3 connected with a respective wavelength output 2, as illustrated. Each splitter SPL-1..SPL-W has a second number Y of splitter outputs 4, wherein each splitter output 4 carries a respective copy of the respective individual wavelength signal λ1.. λW on its splitter input 3.

A third stage S3 connected with the second stage S2 comprises a third number WxY of optical gates GA-11, GA1-Y..GA-K1, GA-KY, wherein the third number WxY is the first number W multiplied by the second number Y. Each optical gate GA-11, GA1-Y..GA-W1, GA-WY comprises a respective gate input 5 and a respective gate output 6 and is cable of blocking and passing on its respective individual wavelength optical signal on its gate input 5. In an embodiment these optical gates are semiconductor optical amplifiers, but in alternative embodiments this may be alternative amplification devices or even passive devices. The optical gates GA-11, GA1-Y..GA-W1, GA-WY main function is to gate the signals, but in further embodiments may also be used to (re)amplify the optical signals in order to compensate for losses and obtain an equalized signal strength at all outputs. In the third stage S3 the optical gates are grouped in W groups GR-1..GR-W as illustrated, one group per optical splitter SPL-1..SPL-W. Each optical gate GA-11, GA1-Y..GA-W1, GA-WY generates, controlled by the earlier-mentioned control module CM, on its respective gate output 6, a respective gated individual wavelength signal λ1g.. λWg of its respective input optical signal λ1.. λW on its respective gate input 5.

A fourth stage S4 connected with the third stage S3 comprises a further plurality of optical combiners CB-1..CB-Y, wherein the further plurality in this embodiment equals the second number Y. Each optical combiner CB-1..CB-Y has a plurality of combiner inputs 7, one for each gated wavelength optical signal λ1g.. λWg and generates on its respective (single) combiner output 8 a respective multiplexed multi-wavelength optical signal λAg, which is coupled to the output terminal OUTP-1..OUTP-Y as illustrated.

All the connections to and from inputs and outputs 1, 2, 3, 4, 5, 6, 7, 8 are optical fibres or optical waveguides.

It must be noted that a major difference between Fig. 4 and previously-reported wavelength selection blocks in the prior art, is that in Fig. 4 there are crossings in the optical paths between the third stage S3 and the fourth stage S4, which are not present in the previously-reported wavelength selection blocks in the prior art.

The individual components of Fig. 4 are discussed in more detail below.

Wavelength splitter WLS / Arrayed Waveguide Grating (AWG): This component serves as a critical junction, i.e., it acts as a spectral prism, demultiplexing the incoming signal into its constituent wavelengths (λ1 through λN). This component is the heart of the system that organizes the chaotic multitude of wavelengths into orderly, separate channels.

Optical splitters SPL-1..SPL-W: These components are positioned after the wavelength splitter WLS. The optical splitters are tasked with dividing each demultiplexed wavelength into multiple individual paths, expanding the network's capability to handle numerous parallel processing streams.

Optical gates GA-11, GA1Y..GA-W1, GA-WY / Semiconductor Optical Amplifiers (SOA): These components are strategically placed along the paths of each specific wavelength channel. These gates/SOAs may amplify the optical signals to compensate for any losses incurred during transmission, ensuring that each wavelength is at an optimal power level for its subsequent journey. The optical gates are preferably Narrow Band SOAs, which are designed to selectively amplify narrow bands within the broader wavelength channels. Such precision suggests a fine-tuned approach to managing signal strength and quality across a multitude of channels. It is important to notice the fact that narrow band SOA may be used, while this is not strictly necessary it makes the solution more appealing due to the simplified design and production of narrow band SOA compared to wide band SOA. This aspect allows integration in a single photonic IC (PIC) for example in a InP-solution which is not possible when using wide band SOA.

Combiners CB-1..CB-Y: These components act as converging points, merging the individually processed channels back into unified outputs. This allows for a composite signal to be tailored and directed towards specific destinations within the network.

Fig. 5 shows an optical distribution block PDB-2 comprising a plurality of wavelength selection blocks WSB-2 as shown in Fig. 4. The figure will be mainly discussed in as far as it differs from previously reported optical distribution blocks in the prior art. The optical distribution block PDB-2 has a first set Si1 of optical input terminals Ti1, Ti2, Ti3..TiN, each input terminal being connected with a respective optical input of a respective wavelength selection block WSB-2, as illustrated. Furthermore, the optical distribution block PDB-2 has a second set So2 of optical output terminals, each output terminal being connected with a respective output of a respective wavelength selection block WSB-2, as illustrated. The structures on a higher level are similar, as the main differences are at the level of the wavelength selection blocks WSB-2 as discussed with reference to Fig. 4. On distribution block level the circuits functions similar. There is shown a plurality P1b of wavelength selection blocks WSB-2, said plurality P1b equalling the earlier mentioned number N. Similarly, there is shown a plurality P2o of optical outputs OUTP per wavelength selection block WSB-2, said plurality P2o equalling the earlier mentioned number Y. The optical output terminals are grouped and for the first group To1 the individual output terminals To1a, To1b, To1c, Told are indicated, while for the other groups individual reference signs To2, To3, To4 are shown. As also illustrated in Fig. 3, the first output terminal To1a of each group is coupled with a first switch module being the first optical circuit switch OCS1 in this embodiment. The second output terminal To2b of each group is coupled with a second switch module being the second optical circuit switch OCS2 in this embodiment.

The third output terminal To3c of each group is coupled with a third switch module being the third optical circuit switch OCS3 in this embodiment. The fourth output terminal To2d of each group is coupled with a fourth switch module being the electronic packets switch EPS in this embodiment. The optical circuit switches OCS1, OCS2, OCS3 and the electronic packet switch EPS together are also referred to as the switching matrix module SMM and are all part of the smart data switch SSW of Fig. 3. Each optical circuit switch OCS1, OCS2, OCS3 and the electronic packet switch EPS are also being referred to as switching matrix.

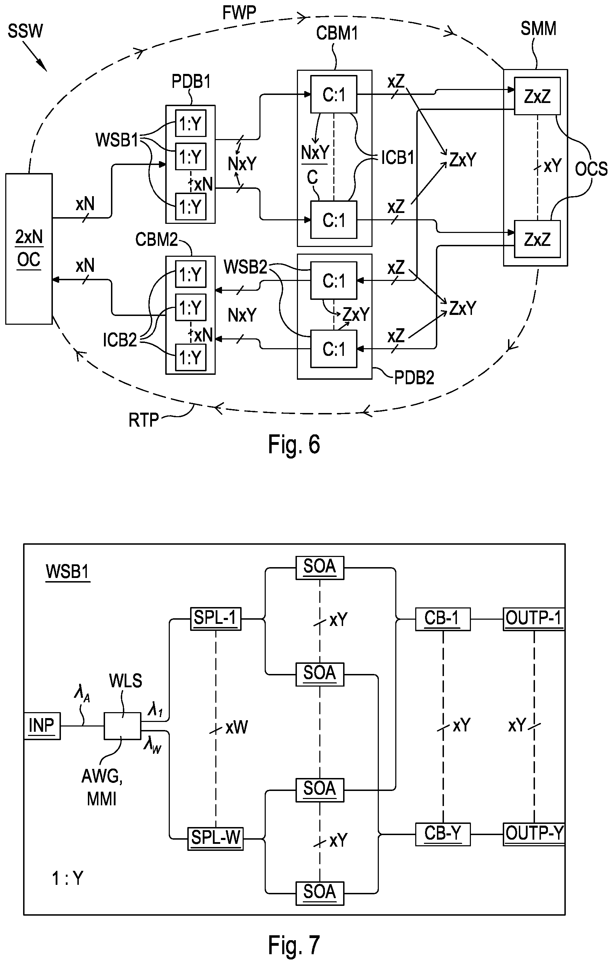

Fig. 6 shows an overview of the main components of an N-port smart data switch SSW in accordance with the invention. On the left side of the figure are shown the optical connectors OC (also referred to as external ports or optical links). In an N-port smart data switch SSW there are typically 2xN optical connectors OC or typically "N" dual LC connectors, which each employ a separate optical fibre for transmission (TX) and reception (RX). From the connectors OC "N" optical paths are coupled with a first N-to-N*Y optical distribution block PDB1, which comprises in total "N" wavelength selection blocks WSB1, which each have a 1-to-Y distribution factor (the number of outputs is "Y" times larger than the number of inputs) as illustrated. The outputs of the optical distribution block PDB1 are coupled with a first combiner block module CBM1 by "N" × "Y" optical paths as illustrated. The first combiner block module CBM1 comprises a first plurality of individual optical combiners ICB1. The number of the individual optical combiners ICB depends on the oversubscription factor C that is chosen, resulting in a generic number of "N" × "Y" divided by "C", which also equals "Z" × "Y" in accordance with the definitions. Outputs of the individual combiners ICB1 are subsequently coupled, using "Z" × "Y" optical paths, with the switching matrix module SMM, which comprises a total of "Y" circuit switches OCS as illustrated. This completes the so-called forward path FWP from the optical connectors OC to the switching matrix module SMM as also illustrated by the dashed arrow FWP directed to the right to the switching matrix module SMM.

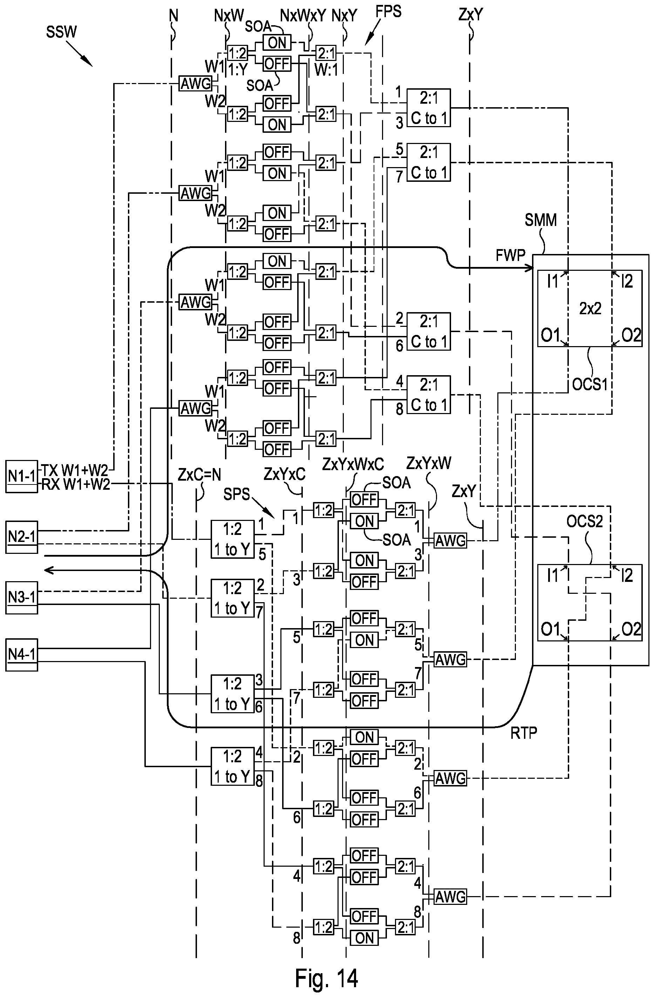

The return path RTP in Fig. 6 runs from the switching matrix module SMM to the optical connectors OC and is illustrated by the dashed arrow RTP directed to the left to the optical connectors OC. The return path RTP starts with "Z" × "Y" optical paths coupled between outputs of the switching matrix module SMM and a second, N-to-N*C optical distribution block PDB2, as illustrated. The function of the second optical distribution block PDB2 is different from the first optical distribution block PDB1 as will be explained with reference to other figures. At this stage it is only mentioned that the multiplication factor is 1-to-C (seen in the direction of the return path RTP) in the second optical distribution block PDB2. Also the generic number of wavelength distribution blocks WSB2 in the second optical distribution block PDB2 is different from the first optical distribution block PDB1, namely "Z" × "Y". In certain embodiments, one of which being discussed in view of Fig. 14, this may be the same number of wavelength distribution blocks WSB1 in the first optical distribution blocks PDB1, but it does not need to be. It all depends on the parameters chosen, including the oversubscription factor C and the number Y of circuit switches OCS in the switching matrix module SMM. Outputs of the second optical distribution block PDB2 are coupled, by means of "N" × "Y" optical paths with a second combiner block module CBM2, which comprises "N" individual combiners ICB2. Finally, from outputs of the second combiner block CBM2 "N" optical paths are coupled back to the optical connectors OC, thereby completing the return path RTP.

Fig. 6 concerns an overall generic structure of the smart data switch SSW and mainly focuses on the main components. Further details in view of these main components are discussed in view of Figs. 7 to 13.

Fig. 7 shows a 1-to-Y wavelength selection block WSB1 that may be used as the first optical distribution block of Fig. 6. The figure corresponds with Fig. 4, but shows less detail and, additionally, some further implementation aspects. The figure will be discussed in as far as the further implementation aspects are concerned. The wavelength splitter WLS in Fig. 4 is now presented as an arrayed-waveguide grating AWG or a Multimode Interference (MMI) coupler, which are the main options for that block. The main function to be carried out by this block is to split multi-wavelength optical signals λA into individual wavelength optical signals λ1..λW. Therefore there are "W" optical splitters SPL-1..SPL-W, each having "Y" outputs that each are fed into a respective semiconductor optical amplifier SOA, which constitute an implementation of the optical gates with optical amplification function GA-11..GA-WY that Fig. 4 refers to. The 4^{th} stage comprising the optical combiners CB-1..CB.Y (with a W-to-1 ratio) bring the number of outputs OUTP-1..OUTP-Y to "Y", as illustrated. So, effectively, each input INP is routed to "Y" outputs that equal the number of circuit switches OCS in the switching matrix module SMM.

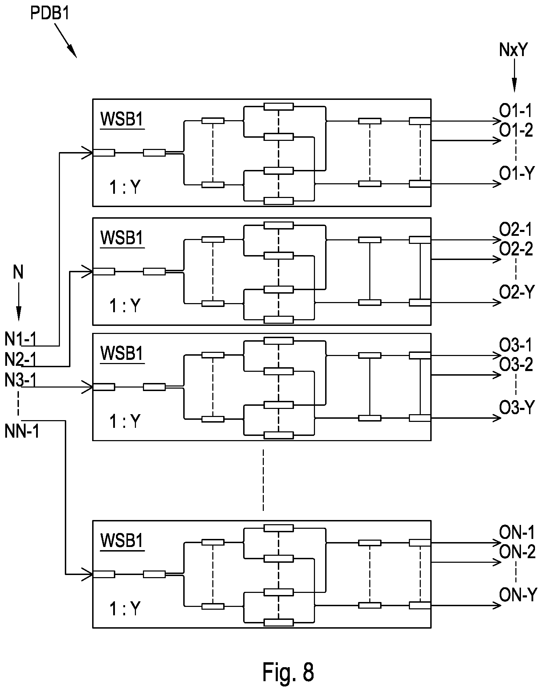

Fig. 8 shows a N-to-N*Y optical distribution block comprising a plurality of wavelength selection blocks WSB1 as shows in Fig. 7, which may be used in the first optical distribution block PDB1 of Fig. 6. The structure is basically a parallel arrangement of "N" wavelength selection blocks WSB1 as illustrated, one for each data network node N1-1, N2-1..NN-1. Also with reference to Fig. 7 it is mentioned that the N-to-N*Y optical distribution block PDB1 is configured for:
a) routing a respective multi-wavelength optical signal λA on each respective optical input xNi to "Y" respective outputs of the first distribution block PDB1, and for
b) selecting at least one individual wavelength signal λ1.. λW within each multi-wavelength optical signal λA for being routed to a respective one of the "Y" respective outputs of the N-to-N*Y optical distribution block PDB1.

Fig. 8 also illustrates that there are "N" inputs, and "N" × "Y" outputs O1-1,O1-2..ON-Y as illustrated. Figs. 7 and 8 show a wavelength selection block WSB-2 and a corresponding optical distribution block PDB1 that were disclosed in non-prepublished patent application EP24199982.0. It must be stressed that also other wavelength selection blocks may be used as long as the above-presented functions are implemented.

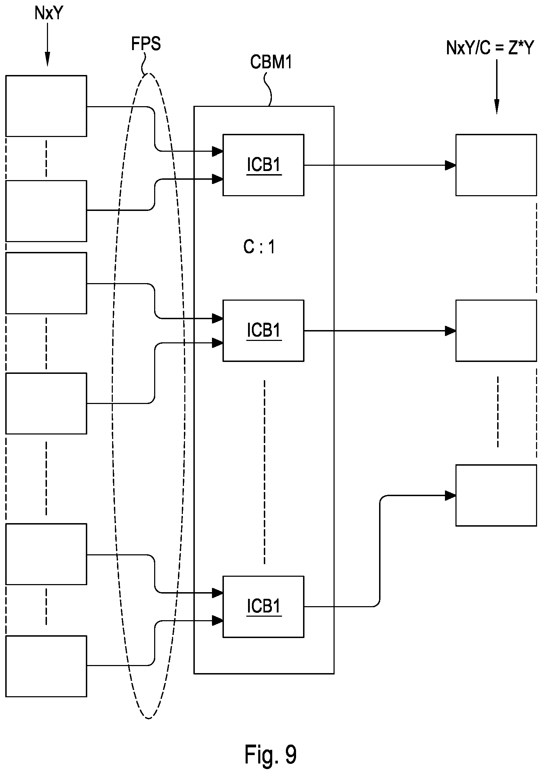

Fig. 9 shows a C-to-1 combiner block CBM1 that may be used as the N-port smart data switch SSW of Fig. 6. As already mentioned, this block is added the configuration in non-prepublished patent application EP24185872.9, which is part of the inventive contribution in the current invention. The C-to-1 combiner block CBM1 contributes to the oversubscription of which the inventor realized it is actually possible in circuit switching. The earlier-mentioned oversubscription factor C may be designed to be typically two, three or even larger all depending on the expected data traffic. More information about oversubscription in general is provided at the end of the detailed description. Fig. 9 illustrates that the "N" × "Y" inputs are grouped into, preferably equally-sized, first groups of "C" inputs according to a first partition scheme FPB, wherein the first partition scheme FPS defines which of the inputs are to be combined in each first group. The possibilities for the first partition scheme FPS are virtually endless, yet certain ways of grouping are preferred or advantageous for design reasons. More information on the first partition scheme FPS will be presented later in the specification. The result of the grouping of optical signals by the C-to-1 combiner block CBM1 is that the number of optical outputs is the oversubscription factor "C" lower than the number of optical inputs, i.e. "N" × "Y" divides by "C", which equals "Z" times "Y", as illustrated.

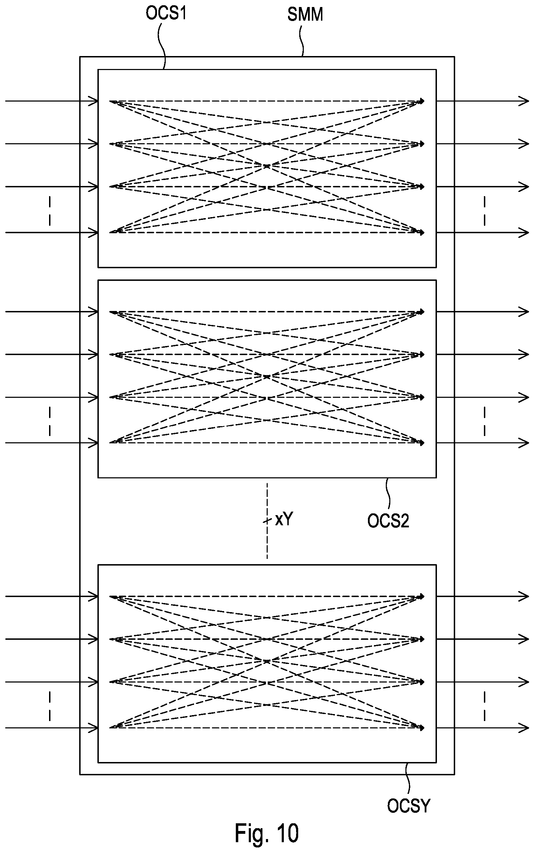

Fig. 10 shows a switching matrix module SMM that may be used in the N-port smart data switch SSW of Fig. 6. Switching matrix modules are known as such. In Fig. 10, the inputs are on the left side and the outputs on the right side. The most important impact of the current invention is that one can refrain from very large switching matrices, which when implement on a photonic integrated circuit (PIC) would have a very low or virtually no yield at all. Instead, the current invention opens up the route to choose smaller switching matrices or circuit switches OCS1, OCS2.. OCSY, which have a much larger yield when implemented on a PIC. Moreover, a very strong advantage of the architecture/configuration of the N-port smart data switch SSW is that the oversubscription, which as such may imply "destructive" combinations of optical signals, can be compensated for by implementing a larger number of circuit switches OCS1..OCSY in the switching matrix module SMM, i.e., to increase the value of "Y". The same applies when the number W of individual wavelength optical signals increased. A larger number of circuit switches OCS..OCSY in the switching matrix module SMM may be choses to compensate for that.

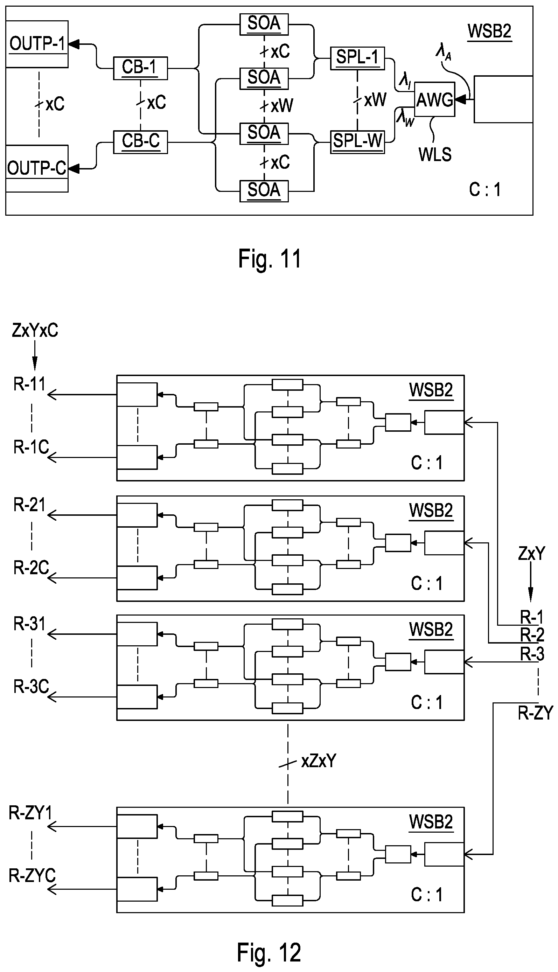

Figs. 11 to 13 disclose the blocks of Fig. 6 in the return path RTP. The inputs in these blocks are therefore located on the right side of the drawings and the outputs on the left side in order to comply with Fig. 6.

Fig. 11 shows a 1-to-C wavelength selection block WSB2 that may be used in the second optical distribution block PDB2 of Fig. 6. The architecture/configuration of this block is very similar to Fig. 7. However, the multiplication factor is now set to be equal to the oversubscription factor C and this has consequence of several of the four stages of the block. The first stage of the circuit comprises the wavelength splitter WLS or Arrayed Waveguide Grating AWG splits the multi-wavelength optical signals λA into individual wavelengths optical signals λ1..λW similar to Fig. 7. The second stage is different in that the generic form of this stage comprises "W" optical splitters SPL-1..SPL-W that each make "C" copies of the optical signal instead of "Y" copies, wherein copy is fed into a respective semiconductor optical amplifier SOA, which constitute an implementation of the optical gates with optical amplification function GA-11..GA-WY (in the third stage) that Fig. 4 refers to. And finally, in the fourth stage there are "C" optical combiners CB-1..CB-C instead of "Y" optical combiners in Fig. 7.

Fig. 12 shows a N-to-N*C optical distribution block comprising a plurality of wavelength selection blocks as shows in Fig. 7, which may be used as the second optical distribution block PDB2 of Fig. 6. The structure is, similar to Fig. 8, basically a parallel arrangement of multiple wavelength selection blocks WSB2 as illustrated, however in the return path RTP the generic number of wavelength selection blocks WSB2 is equal the number of inputs "Z" times the number of circuit switches "Y" in the switching matrix module SMM. In certain embodiments this may equal the total number of data network nodes N, but this does not need to be the case. Also with reference to Fig. 7 it is mentioned that the N-to-N*C optical distribution block PDB2 is configured for:
c) routing respective optical signals on each output of the circuit switches OCS1, OCS2..OCSY within the switching matrix module SMM to "C" outputs of the N-toN*C optical distribution block PDB2, and for
d) selecting individual wavelength signals λ1.. λW from respective multi-wavelength optical signals λA coming from the switching matrix module (SMM) to be routed to a respective one of the "N" optical outputs xNo (Fig. 3).

Fig. 12 also illustrates that there are "Z" × "Y" inputs R-1..R-ZY, and "Z" × "Y" × "C" outputs R-11..R1-1C..R-ZYC as illustrated. Figs. 11 and 12 show a wavelength selection block WSB2 and a corresponding optical distribution block PDB2 that were disclosed in non-prepublished patent application EP24199982.0. It must be stressed that also other wavelength selection blocks may be used as long as the above-presented functions are implemented.

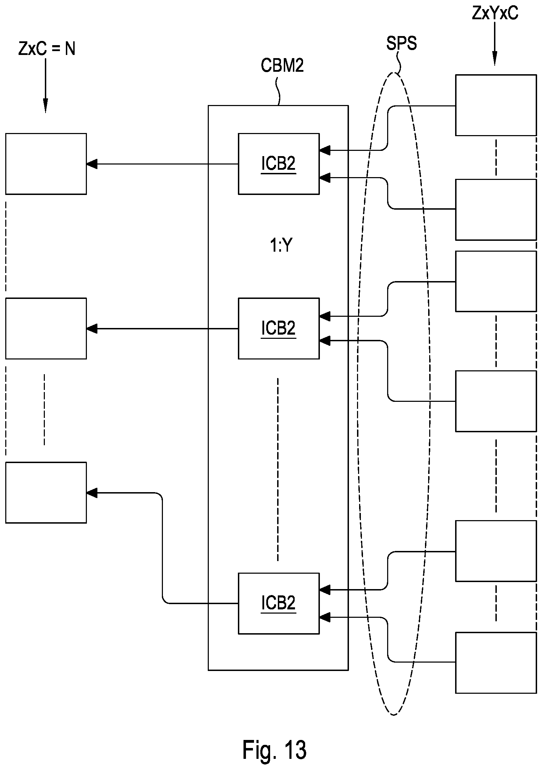

Fig. 13 shows a Y-to-1 combiner block CBM2 that may be used in the N-port smart data switch SSW of Fig. 6. Similar to Fig. 9, this block is added the configuration in non-prepublished patent application EP24185872.9, which is part of the inventive contribution in the current invention. The Y-to-1 combiner block CBM2 contributes to the oversubscription of which the inventor realized it is actually possible in circuit switching. The earlier-mentioned oversubscription factor C may be designed to be typically two, three or even larger all depending on the expected data traffic. More information about oversubscription in general is provided at the end of the detailed description. Fig. 13 illustrates that the "Z" × "Y" × "C" inputs are grouped into equally-sized second groups of "Y" inputs according to a second partition scheme FPB, wherein the second partition scheme FPS defines which of the inputs are to be combined in each second group. As the possibilities for the first partition scheme FPS are virtually endless, yet the second partition scheme is to be chosen such that any scrambling occurring due to the first partition scheme is reversed, i.e. that the original order of optical signals is obtained again. More information on the second partition scheme FPS will be presented later in the specification. The result of the grouping of optical signals by the Y-to-1 combiner block CBM2 is that the number of optical outputs is a factor "Y" lower than the number of optical inputs, i.e. "Z" × "C", which equals the number of data network nodes N, as illustrated.

Based on this overall design, with reference to Figs. 6 to 13, the important blocks are as follows:
1. The N-to-N*Y optical distribution block PDB1: These blocks may be structurally the same as in non-prepublished patent application EP24199982.0. These blocks may be added with a polarization rotation section if necessary, but this does not change the structure as such.
2. The C-to-1 combiner stage CBM1: This component consists of multiple optical combiners that merge C fibres or waveguides into one in accordance with the first partition scheme FPS. Similar optical combiners are also extensively disclosed in non-prepublished patent application EP24199982.0.
3. The N-to-N*C optical distribution block PDB2: This component splits wavelengths from different inputs that were previously combined by the C-to-1 combiner CBM1. Conveniently, this may be achieved using the EP24199982.0. Like the N-to-N*Y optical distribution block PDB1, it acts as a gate, allowing or blocking wavelengths at specific outputs.
4. The Y-to-1 combiner stage CBM2: This combines, in accordance with a second partition scheme SPS, the output of multiple switching modules in such a manner that any scrambling occurring because of the first partition scheme is reserved.

The proposed optical switch design features "N" optical inputs and "N" optical outputs, each capable of handling "W" wavelengths (WDM design). The switch can dynamically connect a given input to a given output by quickly changing its configuration. For instance, it can connect port 1 to port 2. It is important to note that the larger the oversubscription factor (C) and the smaller the number of switching modules "Y", the higher the risk that a given configuration cannot be achieved due to its semi blocking architecture.

Detailed Operation Steps:
1. Polarization Handling (by the N-to-N*Y optical distribution block PDB1, if applicable): Each input signal is first made polarization-independent by merging Transverse Electric (TE) and Transverse Magnetic (TM) modes into TE mode (not always needed but currently most PIC are polarization dependent).
2. Wavelength Demultiplexing by the N-to-N*Y optical distribution block PDB1: The TE-polarized input signal is then demultiplexed using an Arrayed Waveguide Grating (AWG), Multimode Interference (MMI) coupler, or any suitable filter. This process divides the signal into W carriers, each transporting a single wavelength. It is possible to handle multiple wavelengths together.
3. Signal Amplification by the N-to-N*Y optical distribution block PDB1: The separated wavelengths are then amplified using narrow-band Semiconductor Optical Amplifiers (SOAs), for example. This design only amplifies the transported wavelength(s), which is a crucial detail that makes the Photonic Integrated Circuit (PIC) producible and compact with current technology.
4. Wavelength Recombination by the N-to-N*Y optical distribution block PDB1: The amplified wavelengths are recombined into Y outputs. The design allows for flexible wavelength combination, by merging close or far wavelengths together.
5. Scaling Down for Switching by the C-to-1 combiner CBM1 (not in non-prepublished patent application EP24185872.9): Each output is then scaled down to the size of the switching matrix using combiners in the C-to-1 combiner CBM1. This step is feasible only by correctly combining different wavelengths via the amplified distribution block, creating a form of oversubscription (see the end of the detailed description). Here it is important to consider that Fig. 7 only shows one module. Multiple modules as shown in Fig. 8 are needed when *Y*>1. For example, the second module combines 1, *C*+1, 2*C*+1, ... and 2, *C*+2, 2*C*+2, .... In this way, we can reduce the tie between the various inputs.
6. Switch Matrix Module SMM: The outputs from the above module are sent to switch matrix modules with "Z" ports, where "Z" is significantly smaller than "N".
7. Scaling Up After Switching by the N-to-N*C optical distribution block PDB 2 (not in non-prepublished patent application EP24185872.9): The output from the switch matrices is scaled back up via the second optical distribution block PDB2, which correctly splits the different wavelengths according to their destinations.
8. Final Output Combination by the Y-to-1- combiner stage CBM2: The outputs are finally recombined via simple combiners to achieve the final output.

Fig. 14 shows a simple embodiment of the current invention in order to explain further aspects of the invention. In this embodiment the following configuration parameters apply:
- N: Number of ports = 4;
- C: Oversubscription factor = 2 (making Z equal to 2);
- W: Number of wavelengths = 2; and
- Y: Number of switching modules = 2.

On the left side of Fig. 14, there are shown the four ports or data network nodes N1-1..N1-4 and on the right side there is shown the earlier discussed switching matrix module SMM that has two 2-by-2 circuit switches OCS1, OCS2 as illustrated. The number of individual wavelength optical signals with the multi-wavelength optical signal is two, which in the drawings is illustrated with a first wavelength W1 and a second wavelength W2, which may be multiplexed in a single multi-wavelength optical signal. The short-dash line represents the presence of the first wavelength W1, the long-dash line represents the presence of the second wavelength W2, and the combined long-short-dash line represents the presence of both the first wavelength W1 and the second wavelength W2.

In Fig. 14 Arrayed Waveguide Gratings AVG are chosen for the wavelength splitters WLS in Figs. 4, 7 and 11 and Semiconductor Optical Amplifiers SOA are chosen for the gated amplifiers GA-11..GA-WY (Fig. 4). These amplifiers are all controlled by a control module CM (Fig. 4) such that they can either pass (indicated with "ON") or block (indicated with "OFF") a specific wavelength W1, W2, and amplify the signal if necessary.

Even though the ratios of the different blocks and components are fixed in Fig. 14, still the generic ratios based on "N", "Y", "C", "Z" and "W" are presented.

Referring to smart data switch SSW in Fig. 14, we assume the following demand on the data network:
- First node N1-1 needs a TX link to the second node N2-1 and the fourth node N4-1.
- The second node N2-1 needs a TX link to the first node N1-1 with double bandwidth;
- The third node N3-1 needs a TX link to the fourth node N4-1.
- The fourth node N4 -1 is idle.

Without trying to optimize the assignment one may try to find viable paths as illustrated in Fig. 14:
- The first node N1-1 to the second node N2-1 using the first wavelength W1 and OCS1;
- The first node N1-1 to the fourth node N4-1 using the second wavelength W2 and OCS2;
- The second node N2-1 to the first node N1-1 using the second wavelength W2 and OCS1;
- The second node N2-1 to the first node N1-1 using the first wavelength W1 and OCS2; and
- The third node N3-1 to the fourth node N4-1 using the first wavelength W1 and OCS1.

Fig. 14 also illustrates another important aspect of the invention, namely how the first groups and second groups are formed in accordance with the first partition scheme FPS and the second partition scheme SPS, respectively. The first partition scheme FPS is determined by the way the C-to-1 combiners are grouping the outputs of the optical distribution block right before in the forward path FWP. The second partition scheme SPS is determined by the way the Y-to-1 combiners are grouping the outputs of the optical distribution block right before in the return path RTP. Fig. 14 shows that the first partition scheme FPS ensures that groups of "C" outputs are combined. When the outputs are counted from the top side, the numbers at the inputs of the C-to-1 combiners indicated, which output is taken, that is the first combiner takes "1" and "3", the second combiner takes "5" and "7", the third combiner takes "2" and "6" and the fourth combiner takes "4" and "8". It must be stressed that ANY grouping is theoretically possible. However, it is preferred, for design reasons, to do the grouping a bit more predictable and smart.

The first partition scheme FPS is preferably chosen such that within each first group of "C" outputs of the N-to-N*Y optical distribution block PDB1 no individual wavelength optical signals λ1..λW, λ1g..λWg are combined that originate from the same optical input xNi. The reason for this way of partitioning is simply that this would "destroy" the option for high-bandwidth communication coming from that input and corresponding data network node.

Furthermore, the first partition scheme FPS is chosen such that within each first group of "C" outputs of the N-to-N*Y optical distribution block PDB1 only optical signals λ1..λW, λ1g..λWg are combined that are targeted for the same circuit switch OCS1, OCS2 within the N-port smart data switch SSW. The reason for this way of partitioning is that it makes the second partition scheme SPS more predictable and workable.

It must also be noted that the grouping in accordance with the first partition scheme FPS, particularly in accordance with the above-mentioned preferred partitioning, may cause a scrambling of the order of outputs, i.e. in this example "1", "3", "5", "7", "2", "6", "4", and "8".

The second partition scheme SPS as illustrated in Fig. 14 is to be chosen so that this scrambling is reversed, i.e. that the order becomes "1", "2", "3", "4", "5", "6", "7", and "8", respectively. This quickly leads to the first group of the Y-to-1 combiners taking "1" and "5", the second group taking "2" and "7", the third group taking "3" and "6", and the fourth group taking "4" and "8", which in combination restores the order of outputs that were fed to the switching matrix module SMM.

It must be noted that in the above-mentioned descrambling it is assumed that all circuit switches OCS1, OCS2 are in such a position that these do not change the order of the signals at their inputs 11, I2 and maintain this order at their outputs O1, 02. So, in Fig. 14, it is assumed that the second circuit switch OCS2 has a same switching position as the first circuit switch OCS1.

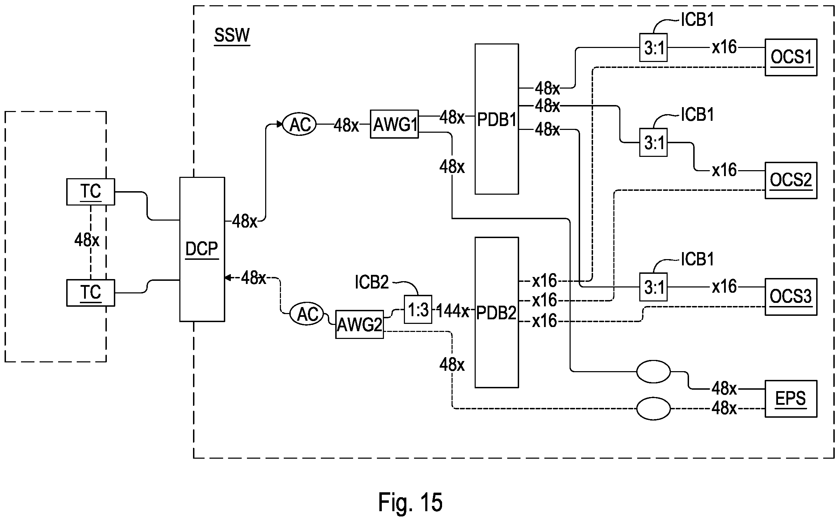

Fig. 15 shows a further embodiment of the current invention which the inventors have developed. Alternative embodiments may include variations in the oversubscription factor, different configurations of the combiner arrays, and the use of other optical elements to further enhance performance and integration capabilities. The design of an N-port smart data switch SMM of the invention can be simplified in production by forcing C =Y. In this particular case the distribution block and the Z to N recombiner can be implemented by the same PIC design.

Fig 15 shows a 48-port smart data switch SSW having a four-wavelength design using a switching matrix module SMM having three optical circuit switches OCS1, OCS2, OCS3 and one electronic packet switch EPS, similar to embodiments disclosed in non-prepublished patent applications EP24185872.9 and EP24199982.0. First of all, Fig. 15 illustrates that the invention does not require circuit switches having a 48-by-48 array, but rather 16-by-16 only. The latter having a significant impact on the yield when implementing the switch on a photonic integrated circuit (PIC). In order facilitate both the circuit switches OCS1..OCS3 and the packet switch this embodiment adds a first additional arrayed waveguide grating AWG1 before the first optical distribution block PDB1 which splits the multi-wavelength optical signal into a group of three wavelengths that are fed into the first optical distribution block PDB1 and a fourth wavelength that is fed directly to the electronic packet switch EPS bypassing the first optical distribution block PDB1. The rest of the forward path is in fact similar to what is earlier discussed in this specification. The return path adds the separate fourth wavelength back into the multi-wavelength optical signal by means of a second additional arrayed waveguide grating AWG2 right after the combiner stage ICB2. The interface of the 48-port smart data switch SSW is a 48-port duplex connector panel DCP, which is coupled with the first and second additional arrayed waveguide grating AWG1, AWG2 by means of 48-port array connectors AC.

It must be stressed that the first additional arrayed waveguide grating AWG1 may be dispensed with in case the first optical distribution block PDB1 is a 1-to-4 optical distribution block of which one of the output is fed to the EPS. In other words, one wavelength bypasses amplification and is statically routed to output 4 (EPS). While this is not mandatory, it simplifies the design of the first optical distribution block PDB1.

Fig. 15 shows a not-fully optimized design for a 48-port smart switch. The design incorporates several architectural optimizations aimed at reducing costs, though they are not strictly required. The proposed distribution block (PIC B) represents a variation of the solution introduced in the EP24199982.0 design, where the number of wavelengths recombined and amplified by the photonic integrated circuit (PIC) has been reduced to three.

### Oversubscription

The concept of oversubscription in optical switches refers to a design strategy where the number of potential connections (or demand) exceeds the available switching capacity at any given time. This strategy is employed to optimize the use of resources, allowing for a more compact and cost-effective design. However, this approach introduces a risk of non-achievable configurations, especially under high-demand scenarios.

The oversubscription factor (C) is defined as the ratio of the total number of ports (N) to the number of ports in a switching module (Z). Mathematically, this can be expressed as C=Z*N. A higher oversubscription factor implies that the design is attempting to serve more ports with fewer resources.

The number of switching modules (Y) indicates how many switching elements are used to manage the connections between input and output ports.

In an ideal scenario, each port would have a dedicated path, but due to the oversubscription strategy, the same switching resources are shared among multiple ports.

The proposed optical data switch design employs an oversubscription strategy, which optimizes the use of smaller switching modules compared to the total number of ports. This is particularly advantageous in reducing the size and complexity of the switch, making it more cost-effective and easier to produce.

Each input signal is demultiplexed into W wavelengths and amplified. The amplified signals are then recombined into Y outputs. These outputs are scaled down using combiners to fit the switching modules, taking advantage of the oversubscription strategy. The outputs from the distribution stage are fed into switch matrix modules, each having Z ports (where Z<<N). This is where the oversubscription factor comes into play. The switch matrix must dynamically reconfigure to connect any given input to any output, sharing the same resources among multiple ports.

The main challenge with oversubscription is the potential for blocking, which occurs when a desired connection cannot be established due to insufficient available paths. This risk increases with higher oversubscription factors (C) and fewer switching modules (Y).

There are potentially blocking Scenarios:
1) In a highly oversubscribed system, multiple inputs may simultaneously require connections to the same output or through the same switching module, leading to contention.
2) As C increases and Y decreases, the likelihood of such contention rises, resulting in non-achievable configurations where the system cannot satisfy all connection requests.

The proposed switch design is semi-blocking, meaning that while it is capable of handling many configurations, there are certain scenarios where blocking can occur. This trade-off is a result of the oversubscription strategy, which, while optimizing resource usage, inherently limits the flexibility of connection paths. Blocking can lead to increased latency and reduced throughput, as some connections may need to wait for resources to become available.

In high-demand scenarios, the performance degradation can become significant, affecting the overall efficiency of the network.

In the invention there are different mitigation strategies possible:
1) Balanced Oversubscription:
   Carefully selecting the oversubscription factor (C) and the number of switching modules (Y) to balance resource optimization and performance. Lowering the oversubscription factor reduces the risk of blocking but increases the size and cost of the switch.
2) Dynamic Reconfiguration:
   Implementing intelligent control algorithms that can dynamically reconfigure the switch matrix to minimize blocking. Prioritizing critical connections and managing traffic patterns to optimize the use of available resources.
3) Redundant Paths:
   Incorporating redundancy in the design to provide alternative paths for connections, reducing the likelihood of blocking. Ensuring that critical connections always have multiple possible routes to improve reliability.

In summary, the oversubscription strategy in the proposed optical switch design offers significant benefits in terms of resource optimization and cost reduction. However, it also introduces a risk of blocking due to the semi-blocking architecture, especially with higher oversubscription factors. Careful design and intelligent management are required to mitigate these risks and ensure efficient and reliable operation in modern optical communication networks.

The particular embodiments disclosed above are illustrative only, as the invention may be modified and practiced in different but equivalent manners apparent to those skilled in the art having the benefit of the teachings herein. For example, many of the circuit types mentioned have thousands of implementations for carrying out the same function. The invention covers all these variants as long as they are covered by the independent claim. No limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise", and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage. In the device claims enumerating several means, several of these means may be embodied by one and the same item of hardware.

## Claims

1. An N-port smart data switch (SSVη for an optical data network (10-1) comprising a plurality of data network nodes (N1-1, N2-1, N3-1, N4-1, NN-1), the N-port smart data switch (SSW) comprising:
i) N optical inputs (xNi);
ii) N optical outputs (xNo);
iii) a switching matrix module (SMM) having Y circuit switches (OCS1, OCS2..OCSY) being placed in parallel, each circuit switch (OCS1, OCS2..OCSY) having N/C inputs and N/C outputs, the switching matrix module (SMM) being placed between the N optical inputs (xNi) and the N optical outputs (xNo);
iv) an N-to-N*Y optical distribution block (PDB1) placed between the N optical inputs (xNi) and the switching matrix module (SMM);
v) a C-to-1-combiner stage (CBM1) placed between the N-to-N*Y optical distribution block (PDB1) and the switching matrix module (SMM), wherein the C-to-1-combiner stage (CBM1) combines respective first groups of each C outputs of the N-to-N*Y optical distribution block (PDB1) into respective single optical signals in such a way that each output of the N-to-N*Y distribution block (PDB1) is used only once, wherein the first groups are formed in accordance with a first partition scheme (FPS);
vi) an N-to-N*C optical distribution block (PDB2) placed between the switching matrix module (SMM) and the optical outputs; and
vii) a Y-to-1 combiner stage (CBM2) placed between the N-to-N*C optical distribution block (PDB2) and the optical outputs, wherein the Y-to-1 combiner stage (CBM2) combines respective second groups of Y outputs of the N-to-N*C-optical distribution block (PDB2) into respective single optical signals in such a way that each output of the N-toN*C distribution block (PDB2) is used only once, wherein the second groups are formed in accordance with a second partition scheme (SPS), wherein the second partition scheme (SPS) is chosen such that any scrambling that occurred during forming of the first groups in accordance with the first partition scheme (FPS) is reversed,
wherein the N-to-N*Y optical distribution block (PDB1) is configured for
a) routing a respective multi-wavelength optical signal (λA) on each respective optical input (xNi) to Y respective outputs of the first distribution block (PDB1), and for
b) selecting at least one individual wavelength signal within each multi-wavelength optical signal (λA) for being routed to a respective one of the Y respective outputs of the N-to-N*Y optical distribution block (PDB1);
wherein the N-to-N*C optical distribution block (PDB2) is configured for
c) routing respective optical signals on each output of the circuit switches (OCS1, OCS2..OCSY) within the switching matrix module (SMM) to C outputs of the N-to-N*C optical distribution block (PDB2), and for
d) selecting individual wavelength signals (λ1.. λW) from respective multi-wavelength optical signals (λA) coming from the switching matrix module (SMM) to be routed to a respective one of the N optical outputs (xNo),
wherein N is the number of optical inputs (xNi) and the number of optical outputs (xNo), wherein N is an integer equal to or larger than two, and wherein Y is the number of circuit switches (OCS1, OCS2..OCSY) within the switching matrix module (SMM), wherein Y is an integer equal to or larger than one, and C is the oversubscription factor of the N-port smart data switch (SSW), wherein C is an integer equal to or larger than two.

2. The N-port smart data switch (SSW) according to claim 1, wherein there are W predefined wavelengths in use by the N-port smart data switch (SSW), thereby allowing each multi-wavelength optical signal (λA) present on the respective optical inputs (xNi) and optical outputs (xNo), in operational use, to have W predefined individual wavelength optical signals (λ1..λW) that are multiplexed in each respective multi-wavelength optical signal (λA), wherein W is the number of wavelengths used by the N-port smart data switch (SSW), wherein W is an integer equal to or larger than two,
wherein each optical distribution block (PDB1, PDB2) is configured for de-multiplexing the multi-wavelength optical signals (λA) on inputs of each respective optical distribution block (PDB1, PDB2) for facilitating individually selectively passing or blocking the respective individual wavelength optical signals (λ1..λW) so as to obtain respective gated individual wavelength optical signals (λg..λWg) on the respective gate outputs (6), wherein each optical distribution block (PDB1, PDB2) is further configured for multiplexing the gated individual wavelength optical signals (λ1g..λWg) into respective gated multi-wavelength optical signals (λAg) on outputs of each optical distribution block (PDB1, PDB2).

3. The N-port smart data switch (SSW) according to claim 1 or 2, wherein the first partition scheme (FPS) is chosen such that within each first group of C outputs of the N-to-N*Y optical distribution block (PDB1) no individual wavelength optical signals (λ1..λW, λ1g..λWg) are combined that originate from the same optical input (xNi).

4. The N-port smart data switch (SSW) according to claim 3, wherein the first partition scheme (FPS) is chosen such that within each first group of C outputs of the N-to-N*Y optical distribution block (PDB1) only optical signals (λ1..λW, λ1g..λWg) are combined that are targeted for the same circuit switch (OCS1, OCS2..OCSY) within the N-port smart data switch (SSW).

5. The N-port smart data switch (SSW) according to any one of the preceding claims, wherein the number (Y) of circuit switches (OCS1, OCS2..OCSY) within the switching matrix module (SMM) equals the oversubscription factor (C) of the N-port smart data switch (SSW).

6. The N-port smart data switch (SSW) according to claim 5, wherein the number of data network nodes equals 48, which equals the number (N) of optical inputs (xNi) and the number of optical outputs (xNo), and wherein the number (Y) of circuit switches (OCS1, OCS2..OCSY) within the switching matrix module (SMM) equals three, and wherein the oversubscription factor (C) of the N-port smart data switch (SSW) also equals three.

7. Optical data network (10-1) comprising a plurality of data network nodes (N1-1, N2-1, N3-1, N4-1, NN-1) and the N-port smart data switch (SSW) according to any one of the preceding claims, the N-port smart data switch (SSW) connecting these data network nodes (N1-1, N2-1, N3-1, N4-1, NN-1) and allowing data communication there between.
